# EUROPEAN PATENT SPECIFICATION

(11) **EP 1 176 731 B1**
(45) Date of publication and mention of the grant of the patent: **02.03.2005**
(21) Application number: 01000274.9
(22) Date of filing: 11.07.2001
(51) Int. Cl.: H04B 1/707

(54) **Interference cancellation of a narrow band interferer in a wide band communication device**
Schmalbandinterferenzunterdrückung in einem Breitband-Kommunikationsgerät
Suppression des signaux d'interférence à bande étroite dans un dispositif pour communication à bande large

(30) Priority: 11.07.2000 US 217276 P; 30.01.2001 US 772756
(43) Date of publication of application: 30.01.2002
(73) Proprietor: Texas Instruments Inc., Dallas, Texas 75251 (US)
(72) Inventor: Nafie, Mohammed, Richardson, Texas (US); Schmidl, Timothy M., Dallas, Texas 75243 (US); Anand, G. Debak, Plano, Texas 75025 (US)
(74) Representative: Holt, Michael

(56) References cited:
- EP-A- 0 812 069
- WO-A-00/46929
- CA-A- 23 424 402
- US-A- 5 148 413
- US-A- 5 185 762
- US-A- 5 612 978

## Description

### TECHNICAL FIELD OF THE INVENTION

This invention relates in general to the field of radio communications and more specifically to interference cancellation/suppression of a narrow band interferer in a wide band communication device.

### BACKGROUND OF THE INVENTION

The operation of a wide band communication device can be severely affected by its proximity to one or more narrow band systems, in particular, if the narrow band system(s) have relatively high power. Given the increasing growth of narrow band systems such as frequency hopping (FHSS) spread spectrum systems like Bluetooth, there is a need in the art for a method and apparatus for canceling/suppressing the interference caused by such narrow band systems on a wide band system.

Suppression of narrow band interference is known for example from Canadian patent 2 342 402 and European Patent Application 0812069 wherein the band is scanned in order to provide appropriate filtering. In the case of fixed systems, filters may be developed a priori as in the system of US Patent 5,185,762.

### BRIEF DESCRIPTION OF THE DRAWINGS

The invention, may best be understood by reference to the following description, taken in conjunction with the accompanying drawings, in the several figures of which like reference numerals identify like elements, and in which:
FIG. 1 shows a block diagram of a dual mode radio.
FIG. 2 highlights the technique of using a notch filter on the narrow band interferer.
FIG. 3 highlights a joint wide band/narrow band detection technique.
FIG. 4 shows a flow chart highlighting the steps taken using the dual mode radio shown in FIG. 1.

### DETAILED DESCRIPTION OF THE PREFERRED EMBODIMENT

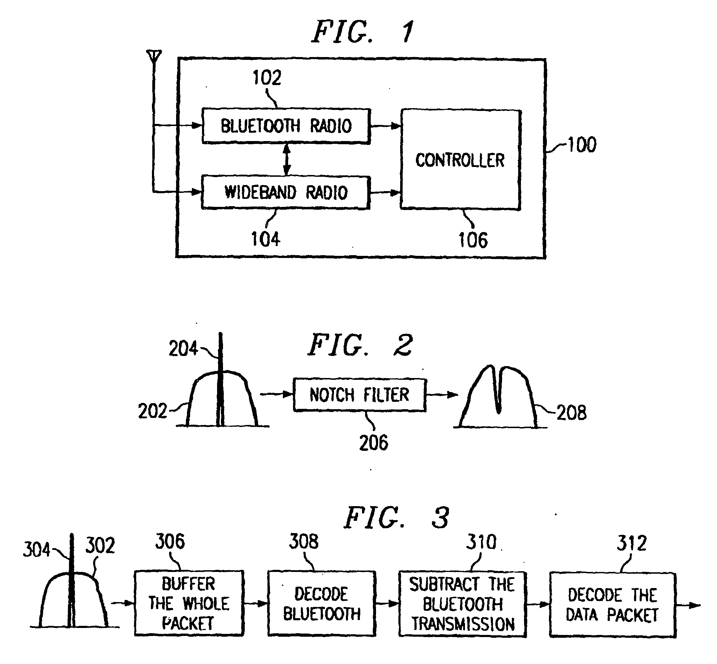

Referring now to FIG. 1, there is shown a dual mode radio 100 including a wide band radio section 104 and a narrow band radio section 102. The narrow band radio section 102 in the preferred embodiment comprises a Bluetooth™ (trademark of Telefonaktiebolaget LM Ericsson Corporation) radio system. The Bluetooth system is operating in the 2.4 Giga-Hertz (GHz) ISM (Industrial Scientific Medicine) band. In a large number of countires around the world the range of this frequency band is 2400-2483.5 Mega_Hertz (MHz). Channel spacing for Bluetooth is 1 MHz and guard bands are used at the lower and upper band edges (e.g., in the United States the lower guard band is 2 MHz and the upper guard band is 3.5 MHz).

The Bluetooth radio 102 can register with, receive and decode transmissions from a Bluetooth piconet. The wide band radio 104 can for example comprise a 802.11b system, a 802.11 system, or a 802.15.3 system. In the preferred embodiment, the wide band radio 104 can comprise any radio that has a wider band than the Bluetooth radio section 102. Assuming the wide band radio 104 comprises a 802.11b system, then the wide band radio comprises a spread spectrum system which covers the 2.4 GHz band. Such a wide band radio can be used for applications such as wireless local area networks (WLAN).

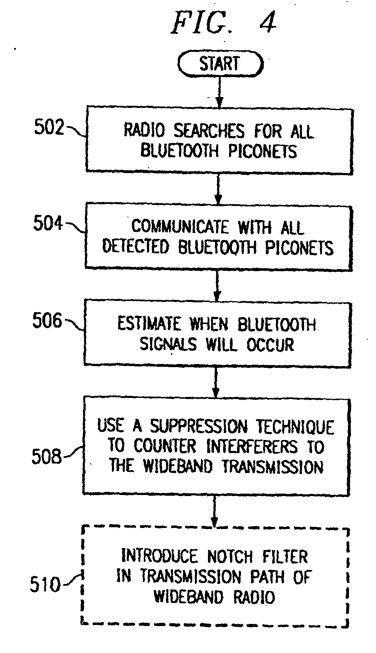

In accordance with the interference suppression/cancellation technique of the preferred embodiment, the steps shown in the flowchart of FIG. 4 are performed. In step 502, the dual mode radio 100 searches for all Bluetooth piconets in its proximity using its Bluetooth radio section 102. The Bluetooth radio section 102 scans across its receive band for potential interferers. If any Bluetooth piconets are detected in the vicinity, this information is stored in the Bluetooth radio section 102 and/or in controller 106. In step 504, dual mode radio 100 will then communicate with all of the detected piconets using the Bluetooth radio section 102 and will hence receive the clock and ID of the piconet masters for each of the Bluetooth piconets detected.

The information received from the piconet masters is then stored in either the Bluetooth radio section 102 and/or controller 106 depending on the particular design of radio 100. Controller 106 can comprise any one of a number of control circuits, including microprocessors, digital signal processors (DSPs), etc. In step 504, the Bluetooth radio section 102 can simply collect the needed information from the Bluetooth master(s) in a non-registered mode (i.e., park mode) or fully register with the detected piconets depending on the system design.

The wide band radio 104 and/or controller 106 uses the clock and the ID of the Bluetooth masters received in step 504 to estimate the hopping frequency and transmission times for all of the Bluetooth transmissions in step 506. In step 508, if the wide band radio 104 receives a transmission from another wide band radio on a frequency band that overlaps one of the Bluetooth bands that had been previously detected, it will use one of the following two suppression techniques:

### Notch Filter

The wide band radio 104 will place a programmable notch filter(s) in the Bluetooth band(s) that will potentially interfere with the wide band radio 104 reception of wide band signals. The notch filter(s) can be implemented digitally or in analog fashion as is known in the art. In FIG. 2 there is shown a wide band transmission 202 that has been interfered with by a narrow band Bluetooth transmission signal 204. A notch filter 206 implemented within the wide band radio 104 filters out the interfering signal Bluetooth signal 204 in order to produce the resultant signal 208. The filtered signal 208 can then be properly decoded by the wide band radio 104. By registering with the potential interfering narrow band systems, radio 100 can add the notch filter(s) prior to even receiving the wide band transmission in some cases since the timing and hopping information for the interfering Bluetooth systems is known by radio 100.

### Joint Detection

An alternative embodiment to the introduction of a filter as discussed above, is to jointly detect both the data packet that is intended for the wide band radio 104 and the Bluetooth packet(s) that have the potential of interfering with the wide band data packet. This can be done by buffering the whole packet received by the wide band radio section 104 including both the wide band 302 and narrow band 304 information as shown in block 306 of FIG. 3. Then using the Bluetooth section 102, the Bluetooth packet 304 after appropriate filtering is decoded in block 308. The Bluetooth transmission can then be subtracted from the whole packet that was received using conventional filtering or other techniques. Finally, in block 312, the wide band data packet is decoded by the wide band radio 104. As an optional step, in step 510 shown in FIG. 4, a notch filter can be placed on the wide band radio's transmitter path so that the wide band radio's transmissions do not interferer with the Bluetooth piconet that overlap (are) the wide band radio's 104 frequency band.

## Claims

1. A method of suppressing one or more narrow band signals that fall within the bandwidth of a wide band radio that receives wide band signals, comprising:
(a) searching for narrow band systems whose band lies within said bandwidth of the wideband radio;
(b) receiving information from one or more of the narrow band systems that were found in step (a); and
(c) using the information received in step (b) to predetermine frequencies at which the narrow band signals may be transmitted in order to provide suppression at said frequencies to suppress any of the one or more narrow band signal(s) from the wide band signal sent to the radio in the event that narrow band transmission occurs.

2. A method as defined in claim 1, wherein step (c) comprises:
providing one or more notch filters at said frequencies in order to suppress the one or more narrow band signals.

3. A method as defined in claim 1 or claim 2, wherein step (b) comprises:
receiving information as to when and at what frequency the one or more narrow band signals will be transmitted by the one or more narrow band systems.

4. A method as defined in any preceding claim, wherein the one or more narrow band systems comprise Bluetooth systems and the narrow band signals comprise Bluetooth packets and steps (a), and (b) are performed by a narrow band radio means which is part of the wide band radio.

5. A method as defined in claim 4, wherein the narrow band radio means comprises Bluetooth radio means.

6. A method as defined in claim 4 or claim 5, wherein step (b) further comprises:
receiving information about the clock and ID of the one or more Bluetooth system masters in order to estimate the hopping frequency and transmission times of the Bluetooth packets.

7. A method as defined in any preceding claim, further comprising the step of:
(d) placing one or more notch filters in the transmission path of the wide band radio so that any wide band transmissions sent by the wide band radio do not affect the one or more narrow band systems.

8. A method as defined in claim 7, wherein step (d) uses the information in step (b) to determine where to place the one or more notch filters.

9. A method as defined in any preceding claim, wherein the wide band radio comprises narrow band radio means and wide band radio means, the wide band signals are wide band packets and the narrow band signals are narrow band packets, and the wide band radio will jointly receive any wide band packets and any narrow band packets falling within the wide band radio's bandwidth.

10. A method as defined in claim 9, wherein the narrow band radio means comprises a Bluetooth radio system and the narrow band packets are Bluetooth packets, and comprising the further steps of:
buffering the jointly received packets;
decoding the Bluetooth packets found in the jointly received packets using the Bluetooth radio system;
subtracting the Bluetooth packets from the jointly received packets; and
decoding the jointly received packets after the Bluetooth packets have been subtracted from the jointly received packets.

11. A method as defined in any preceding claim, wherein step (b) is performed after the wide band radio registers with the one or more narrow band systems.

12. A wide band radio, comprising:
a wide band radio means for receiving wide band packets;
narrow band radio means for receiving packets sent by one or more narrow band systems that operate within the wide band radio's bandwidth, the narrow band radio means coupled to the wide band radio section; and
wherein the narrow band radio means is adapted to search for narrow band systems and to communicates with any narrow band systems it detects, and the wide band radio means is adapted to use the information received from the narrow band systems to suppress the narrow band packets from any wide band packets received by the wide band radio means.

13. A wide band radio as defined in claim 12, wherein the wide band radio is adapted to use the information received from the one or more narrow band systems to set up one or more notch filters which are used to remove the narrow band packets from the wide band packets received by the wide band radio means.

14. A wide band radio as defined in claim 12 or claim 13, wherein the wide band radio means is adapted to receive a packet comprising both the desired wide band packet and one or more narrow band packets; and
the narrow band means is adapted to decode the one or more narrow band packets and the wide band radio is adapted to subtract the one or more narrow band packets from the received packet.

15. A wide band radio as defined in claim 14, wherein the wide band radio means is adapted to decode the received packet after the one or more narrow band packets have been subtracted from the received packet.

## Patentansprüche

1. Verfahren für die Unterdrückung eines oder mehrerer Schmalbandsignale, die in die Bandbreite eines Breitbandfunkgeräts fallen, das Breitbandsignale empfängt, Folgendes umfassend:
(a) Suche nach Schmalbandsystemen, deren Band sich in der Bandbreite des Breitbandfunkgeräts befindet;
(b) Empfang von Informationen von einem oder von mehreren der Schmalbandsysteme, die in Schritt (a) gefunden wurden; und
(c) Verwendung der in Schritt (b) erhaltenen Informationen, um Frequenzen vorauszubestimmen, in denen die Schmalbandsignale übertragen werden können, damit bei diesen Frequenzen eine Unterdrückung geschaffen wird, um für den Fall, dass eine Schmalbandübertragung stattfindet, jedes der Schmalbandsignale bzw. das eine Schmalbandsignal im an das Funkgerät gesendeten Breitbandsignal zu unterdrücken.

2. Verfahren, wie in Anspruch 1 definiert, bei dem Schritt (c) Folgendes umfasst:
Bereitstellung eines oder mehrerer Kerbfilter bei den Frequenzen, um das bzw. die Schmalbandsignal(e) zu unterdrücken.

3. Verfahren, wie in Anspruch 1 oder Anspruch 2 definiert, bei dem Schritt (b) Folgendes umfasst:
Empfang von Informationen darüber, wann und bei welcher Frequenz das bzw. die Schmalbandsignal(e) durch das bzw. die Schmalbandsystem(e) übertragen werden.

4. Verfahren, wie in einem der vorherigen Ansprüche definiert, bei dem das bzw. die Schmalbandsystem(e) Bluetooth-Systeme umfassen und die Schmalbandsignale Bluetooth-Pakete umfassen und Schritte (a) und (b) durch ein Schmalbandfunkmittel, das ein Teil des Breitbandfunkgeräts ist, ausgeführt werden.

5. Verfahren, wie in Anspruch 4 definiert, bei dem das Schmalbandfunkmittel Bluetooth-Funkmittel umfasst.

6. Verfahren, wie in Anspruch 4 oder Anspruch 5 definiert, bei dem Schritt (b) ferner Folgendes umfasst:
Empfang von Informationen über den Takt und die ID des Bluetooth-Hauptsystems bzw. der Bluetooth-Hauptsysteme, um die Hoppingfrequenz und die Übertragungszeiten der Bluetooth-Pakete zu schätzen.

7. Verfahren, wie in einem der vorherigen Ansprüche definiert, das ferner den folgenden Schritt umfasst:
(d) Platzierung eines oder mehrerer Kerbfilter in den Übertragungspfad des Breitbandfunkgeräts, so dass jegliche durch das Breitbandfunkgerät gesendeten Breitbandübertragungen keinerlei Einfluss auf das bzw. die Schmalbandsystem(e) haben.

8. Verfahren, wie in Anspruch 7 definiert, bei dem Schritt (d) die Informationen in Schritt (b) dazu verwendet, um zu bestimmen, wohin das bzw. die Kerbfilter platziert werden.

9. Verfahren, wie in einem der vorherigen Ansprüche definiert, bei dem das Breitbandfunkgerät Schmalbandfunkmittel und Breitbandfunkmittel umfasst, die Breitbandsignale Breitbandpakete und die Schmalbandsignale Schmalbandpakete sind und das Breitbandfunkgerät jegliche Breitbandpakete bzw. Schmalbandpakete, die in die Bandbreite des Breitbandfunkgeräts fallen, gemeinsam empfängt.

10. Verfahren, wie in Anspruch 9 definiert, bei dem das Schmalbandfunkmittel ein Bluetooth-Funkübertragungssystem umfasst und die Schmalbandpakete Bluetooth-Pakete sind, und das ferner die folgenden Schritte umfasst:
Pufferung der gemeinsam empfangenen Pakete;
Dekodierung der in den gemeinsam empfangenen Paketen gefundenen Bluetooth-Pakete unter Verwendung des Bluetooth-Funkübertragungssystems;
Subtraktion der Bluetooth-Pakete von den gemeinsam empfangenen Paketen; und
Dekodierung der gemeinsam empfangenen Pakete, nachdem die Bluetooth-Pakete von den gemeinsam empfangenen Paketen subtrahiert wurden.

11. Verfahren, wie in einem der vorherigen Ansprüche definiert, bei dem Schritt (b) ausgeführt wird, nachdem das Breitbandfunkgerät bei dem bzw. den Schmalbandsystem(en) registriert ist.

12. Breitbandfunkgerät, das Folgendes umfasst:
ein Breitbandfunkmittel für den Empfang von Breitbandpaketen;
Schmalbandfunkmittel für den Empfang von Paketen, die von einem oder mehreren Schmalbandsystem(en), die in der Bandbreite des Breitbandfunkgeräts arbeiten, gesendet wurden, wobei das Schmalbandfunkmittel mit dem Breitbandfunkabschnitt gekoppelt ist; und
bei dem das Schmalbandfunkmittel dafür geeignet ist, nach Schmalbandsystemen zu suchen und mit jedem der von ihm entdeckten Schmalbandsysteme zu kommunizieren, und das Breitbandfunkmittel dafür geeignet ist, die vom Schmalbandsystem empfangenen Informationen zu verwenden, um die Schmalbandpakete in jedem Breitbandpaket, das vom Breitbandfunkmittel empfangen wurde, zu unterdrücken.

13. Breitbandfunkgerät, wie in Anspruch 12 definiert, bei dem das Breitbandfunkgerät dafür geeignet ist, die von dem bzw. den Schmalbandsystem(en) empfangenen Informationen zu verwenden, um einen oder mehrere Kerbfilter aufzubauen, die dafür verwendet werden, die Schmalbandpakete aus den Breitbandpaketen, die vom Breitbandfunkmittel empfangen wurden, zu entfernen.

14. Breitbandfunkgerät, wie in Anspruch 12 oder Anspruch 13 definiert, bei dem das Breitbandfunkmittel dafür geeignet ist, ein Paket zu empfangen, das sowohl das gewünschte Breitbandpaket als auch das bzw. die Schmalbandpaket(e) umfasst; und
bei dem das Schmalbandmittel dafür geeignet ist, das bzw. die Schmalbandpaket(e) zu dekodieren, und das Breitbandfunkgerät dafür geeignet ist, das bzw. die Schmalbandpaket(e) vom empfangenen Paket zu subtrahieren.

15. Breitbandfunkgerät, wie in Anspruch 14 definiert, bei dem das Breitbandfunkmittel dafür geeignet ist, das empfangene Paket zu dekodieren, nachdem das bzw. die Schmalbandpaket(e) vom empfangenen Paket subtrahiert wurde(n).

## Revendications

1. Procédé pour supprimer plusieurs signaux à bande étroite, qui se situent dans la largeur de bande d'un poste radio à large bande qui reçoit des signaux à large bande, comprenant les étapes consistant à :
(a) rechercher des systèmes à bande étroite, dont la bande se situe dans ladite largeur de bande du poste radio à large bande;
(b) recevoir des informations de la part d'un ou de plusieurs des systèmes à bande étroite, qui ont été trouvés lors de l'étape (a); et
(c) utiliser l'information reçue lors de l'étape b) pour déterminer les fréquences, auxquelles les signaux à bande étroite peuvent être transmis de manière à réaliser une suppression desdites fréquences pour supprimer n'importe lequel d'un ou de plusieurs signaux à bande étroite à partir du signal à large bande émis par le poste radio dans le cas où une émission à bande étroite se produit.

2. Procédé selon la revendication 1, selon lequel l'étape (c) consiste à :
prévoir un ou plusieurs filtres rejecteurs auxdites fréquences de manière à supprimer le signal ou la pluralité de signaux à bande étroite.

3. Procédé selon la revendication 1 ou la revendication 2, selon lequel l'étape (b) consiste à :
recevoir une information concernant le moment et la fréquence, auxquels le signal ou la pluralité de signaux à bande étroite sont émis par le système ou la pluralité de systèmes à bande étroite.

4. Procédé selon l'une quelconque des revendications précédentes, selon lequel le système ou la pluralité de systèmes à bande étroite comprend des systèmes Bluetooth et les signaux à bande étroite comprennent des paquets Bluetooth et les étapes (a) et (b) sont exécutées à l'aide de moyens radio à bande étroite, qui font partie du poste radio à large bande.

5. Procédé selon la revendication 4, selon lequel les moyens radio à bande étroite comprennent des moyens radio Bluetooth.

6. Procédé selon la revendication 4 ou la revendication 5, selon lequel l'étape (b) consiste en outre à :
recevoir une information concernant l'horloge et l'identifiant ID d'un ou de la pluralité de maîtres du système Bluetooth pour estimer la fréquence de saut et les instants d'émission des paquets Bluetooth.

7. Procédé selon l'une quelconque des revendications précédentes, comprenant en outre l'étape consistant à :
(d) placer un ou plusieurs filtres rejecteur sur le trajet d'émission du poste radio à large bande de telle sorte qu'aucune émission à large bande émise par le poste radio à large bande n'affecte le système ou la pluralité de systèmes à bande étroite.

8. Procédé selon la revendication 7, selon lequel l'étape (d) utilise l'information de l'étape (b) pour déterminer l'endroit où il faut placer le filtre ou la pluralité de filtres rejecteurs.

9. Procédé selon l'une quelconque des revendications précédentes, selon lequel le poste radio à large bande comporte des moyens radio à bande étroite et des moyens radio à large bande, les signaux à large bande sont des paquets à large bande et les signaux à bande étroite sont des paquets à bande étroite, et le poste radio à large bande reçoit conjointement n'importe quel paquet à bande large et n'importe quel paquet à bande étroite entrant dans la largeur de bande du poste radio à large bande.

10. Procédé selon la revendication 9, selon lequel des moyens radio à bande étroite comprennent un système radio Bluetooth et les paquets à bande étroite sont des paquets Bluetooth, et comprenant les étapes supplémentaires consistant à :
mémoriser temporairement les paquets reçus conjointement;
décoder les paquets Bluetooth trouvés dans les paquets reçus conjointement en utilisant le système radio Bluetooth;
soustraire les paquets Bluetooth des paquets reçus conjointement; et
décoder les paquets reçus conjointement après que les paquets Bluetooth ont été soustraits des paquets reçus conjointement.

11. Procédé selon l'une quelconque des revendications précédentes, selon lequel l'étape (b) est exécutée après que le poste radio à large bande s'est aligné avec le système ou la pluralité de systèmes à bande étroite.

12. Poste radio à large bande, comprenant :
des moyens radio à large bande pour recevoir des paquets à large bande;
des moyens radio à bande étroite pour recevoir des paquets émis par un ou plusieurs systèmes à bande étroite, qui fonctionnent dans la largeur de bande du poste radio à bande large, les moyens radio à bande étroite étant couplés à la section radio à large bande; et
dans lequel les moyens radio à bande étroite sont adaptés pour rechercher des systèmes à bande étroite et pour communiquer avec n'importe quel système à bande étroite, qu'ils détectent, et les moyens radio à large bande sont adaptés pour utiliser l'information reçue de la part du système à bande étroite pour supprimer les paquets à bande étroite dans n'importe quel paquet à large bande reçu par les moyens radio à large bande.

13. Poste radio selon la revendication 12, dans lequel le poste radio à large bande est adapté pour utiliser l'information reçue de la part du système ou de la pluralité de systèmes à bande étroite pour régler un ou plusieurs filtres rejecteurs, qui sont utilisés pour retirer les paquets à bande étroite des paquets à large bande reçus par les moyens radio à large bande.

14. Poste radio selon la revendication 12 ou la revendication 13, dans lequel les moyens radio à large bande sont adaptés pour recevoir un paquet comprenant à la fois le paquet à large bande désiré et un ou plusieurs paquets à bande étroite; et
les moyens à bande étroite sont adaptés pour décoder le paquet ou la pluralité de paquets à bande étroite et le poste radio à large bande est adapté pour soustraire le paquet ou la pluralité de paquets à bande étroite du paquet reçu.

15. Poste radio selon la revendication 14, dans lequel les moyens radio à large bande sont adaptés pour décoder le paquet reçu après que le paquet ou la pluralité de paquets à bande étroite ont été soustraits du paquet reçu.
